# EUROPÄISCHE PATENTSCHRIFT

(11) **EP 2 847 488 B1**
(45) Veröffentlichungstag und Bekanntmachung des Hinweises auf die Patenterteilung: **16.01.2019**
(21) Anmeldenummer: 13719021.1
(22) Anmeldetag: 23.04.2013
(51) Int. Cl.: B60G 3/20, B60G 13/00, F16H 35/10, F16F 15/03, B60G 13/14

(54) **DÄMPFUNGSEINRICHTUNG MIT EINEM ROTATIONSDÄMPFER**
DAMPING DEVICE HAVING A ROTARY DAMPER
DISPOSITIF D'AMORTISSEMENT COMPRENANT UN AMORTISSEUR DE ROTATION

(30) Priorität: 08.05.2012 DE 102012009168
(43) Veröffentlichungstag der Anmeldung: 18.03.2015
(73) Patentinhaber: Audi AG, 85045 Ingolstadt (DE)
(72) Erfinder: WILLEMS, Marco, 85053 Ingolstadt (DE)
(74) Vertreter: Reichert, Thomas Klaus
(86) Internationale Anmeldenummer: PCT/EP2013/001207
(87) Internationale Veröffentlichungsnummer: WO 2013/167238

(56) Entgegenhaltungen:
- DE-A1-102008 062 512
- DE-A1-102010 035 084
- US-A1- 2006 016 629

## Beschreibung

Die Erfindung betrifft eine Dämpfungseinrichtung mit einem Rotationsdämpfer nach dem Oberbegriff des Patentanspruchs 1.

Als Rotationsdämpfer können elektrische Dämpfer oder hydraulische Dämpfer in mechanischen Dämpfungseinrichtungen vorgesehen werden. Die Dämpfer entziehen dabei einem schwingungsfähigen System Energie, um auftretende Schwingungen zu dämpfen. Sehr vorteilhaft können dabei elektrische Rotationsdämpfer verwendet werden, da mit diesen unter Ausnutzung der Schwingungsenergie elektrische Energie erzeugt werden kann, die dann beispielsweise in das Bordnetz eines Kraftfahrzeugs eingespeist werden kann, in welchem die Dämpfungseinrichtung mit dem elektrischen Rotationsdämpfer angeordnet ist.

Aus der DE 10 2010 035 084 A1 ist ein elektrischer Dämpfer für ein Kraftfahrzeug bekannt, der zum Dämpfen einer Relativbewegung zwischen zwei Bauteilen einsetzbar ist. Eine um eine Achse auslenkbare Koppelstange ist über ein Planetengetriebe mit dem Rotor des als Generator wirkenden Rotationsdämpfers gekoppelt. Durch eine Auslenkung der Koppelstange wird über das Planetengetriebe der Rotor in Rotation versetzt. Durch die auftretende elektrische Induktion wirkt der Drehrichtung des Rotors eine Gegenkraft entgegen, die eine Dämpfung der Auslenkbewegung der Koppelstange bewirkt.

Die Koppelstange einer solchen Dämpfungseinrichtung wird von den zu dämpfenden Schwingungsbewegungen in einem verhältnismäßig kleinen Winkelbereich um seine Achse ausgelenkt. Dies hat zur Folge, dass auch ein mit der Koppelstange starr verbundenes Zahnrad, beispielsweise ein Hohlrad eines Planetengetriebes, ebenfalls immer nur in einem kleinen Winkelbereich ausgelenkt wird, wodurch das Zahnrad bzw. die Zahnräder der ersten Getriebestufe ungleichmäßig belastet werden. Gerade bei höheren Stoßbelastungen, die an der Koppelstange angreifen, kann dies an den Zahnrädern zu einem ungleichmäßigen und örtlich überhöhten Verschleiß führen, was sich negativ auf die Lebensdauer des zwischen Koppelstange und Rotationsdämpfer angeordneten Getriebes auswirken kann.

Der Erfindung liegt die Aufgabe zugrunde, eine Dämpfungseinrichtung mit einem über ein Getriebe mit einem Eingangselement gekoppelten Rotationsdämpfer bereitzustellen, die im Hinblick auf höhere impulsförmige Belastungen eine geringere Verschleißanfälligkeit hat.

Die Aufgabe ist durch die Merkmale des Patentanspruchs 1 gelöst. Bevorzugte Weiterbildungen der Erfindung sind in den Unteransprüchen offenbart.

Die Erfindung geht von einem Rotationsdämpfer mit einem Eingangselement aus, das zum Beispiel im Fahrbetrieb um eine Schwenkachse in Schwenkbewegung versetzbar ist. Gemäß dem kennzeichnenden Teil des Patentanspruchs 1 ist das Eingangselement der Dämpfungseinrichtung über eine Rutschkupplung mit einem Getriebe gekoppelt, so dass an der Rutschkupplung auftretende Drehmomente, die über einem vorgegebenen Grenzdrehmoment liegen, zu einer Relativbewegung zwischen dem Eingangselement und dem Getriebe führen. Dadurch werden an dem Eingangselement auftretende Stoßbelastungen nur bis zu einem Drehmomentgrenzwert an das Getriebe weitergegeben, wodurch Überbelastungen an den Getriebezahnrädern vermieden werden. Außerdem bewirkt das bei einer derartigen Stoßbelastung auftretende Durchrutschen des Eingangselements, dass sich deren Position in Bezug auf das mit ihr über die Rutschkupplung gekoppelte Zahnrad des Getriebes ändert. Das über die Rutschkupplung mit dem Eingangselement gekoppelte Zahnrad wird somit nicht immer im gleichen Teilwinkelbereich belastet.

Das Eingangselement des Rotationsdämpfers kann in einer Ausführungsform als Koppelstange ausgeführt sein, die Bestandteil einer Radaufhängung ist. Bei der Radaufhängung kann ein Lenker aus einem am Radträger angelenkten Lenkerverband über die Koppelstange sowie über eine Schwenkachse drehgelenkig mit dem Fahrzeugaufbau verbunden sein.

Die nachfolgende Würdigung von weiteren Aspekten der Erfindung erfolgt mit Bezug auf die Ausbildung des Eingangselements speziell als Koppelstange. Es versteht sich jedoch, dass die Erfindung nicht auf eine solche Koppelstange beschränkt ist, sondern jegliches Eingangselement mitumfasst.

Der Rotationsdämpfer ist als elektrischer Rotationsdämpfer ausgebildet, der als Generator arbeitet. Der Generator wandelt die zur Dämpfung einer an der Koppelstange auftretenden Auslenkbewegung erforderliche Energie in elektrische Energie um, mit der beispielsweise das Bordnetz eines Kraftfahrzeugs gespeist werden kann.

Besonders vorteilhaft ist es weiterhin, die Dämpfungseinrichtung so auszubilden, dass das Grenzdrehmoment der Rutschkupplung einstellbar ist. Dadurch lässt sich das Grenzdrehmoment an unterschiedliche Fahrsituationen oder aber auch unterschiedliche Anwendungsbereiche anpassen.

Die Rutschkupplung ist vorzugsweise zwischen der Koppelstange und einer ersten Stufe eines mehrstufigen Getriebes angeordnet. Beispielsweise kann es sich dabei um ein zweistufiges Planetengetriebe handeln, dessen Hohlrad der ersten Getriebestufe über die Rutschkupplung mit der Koppelstange gekoppelt ist. Dabei kann die Rutschkupplung sehr vorteilhaft zwischen der zylindrischen Umfangsfläche des Hohlrades und einem Befestigungsauge der Koppelstange angeordnet sein. Die Koppelstange kann aber auch in anderer Weise, beispielsweise über einen Flansch und eine scheibenförmige Rutschkupplung mit der ersten Getriebestufe des Getriebes gekoppelt sein. Die Bauart der jeweils verwendeten Rutschkupplung kann dabei an den jeweiligen Einsatzzweck angepasst sein, wobei eine ein Hohlrad umgreifende Rutschkupplung einen sehr kompakten und damit platzsparenden Gesamtaufbau für die Dämpfungseinrichtung ermöglicht.

Eine derart platzsparende Anordnung ergibt sich auch dadurch, wenn die Rutschkupplung zwischen dem Getriebegehäuse und der Koppelstange in Form einer das Getriebegehäuse ringförmig umschließenden Rutschkupplung ausgebildet ist.

Erfindungsgemäss ist die Koppelstange mit einem Befestigungsauge ausgebildet, um in diesem Bereich die Rutschkupplung, die zwischen Getriebe und Koppelstange wirksam ist, anzubringen.

Die Erfindung ist nachfolgend anhand von in der Zeichnung dargestellten Ausführungsbeispielen näher erläutert.

Es zeigen:
- Fig. 1: in schematischer Darstellung eine Radaufhängung eines Fahrzeugrades,
- Fig. 2: eine Dämpfungseinrichtung mit einer Koppelstange und einem Rotationsdämpfer,
- Fig. 3: die Seitenansicht einer Dämpfungseinrichtung mit ringförmiger Rutschkupplung,
- Fig. 4: die stirnseitige Ansicht der Dämpfungseinrichtung von Figur 3,
- Fig. 5: eine schematische Darstellung der Dämpfungseinrichtung von Figur 3 in Form von Funktionsblöcken und
- Fig. 6: einen vereinfachten Querschnitt einer Dämpfungseinrichtung im Bereich der ersten Getriebestufe eines Planetengetriebes.

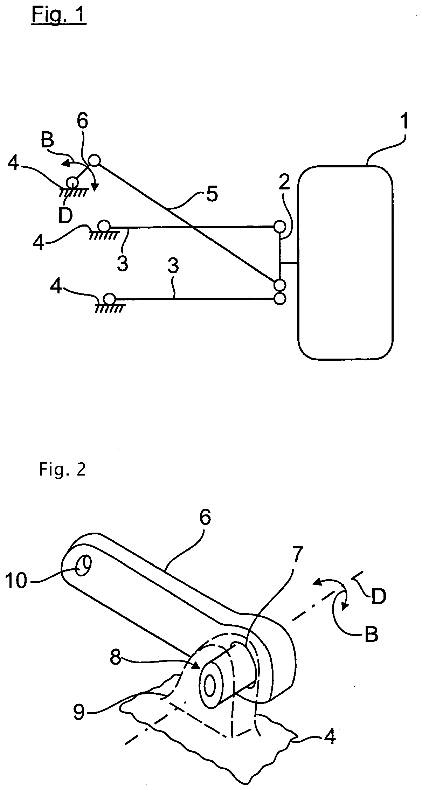

In Figur 1 ist die Radaufhängung eines Fahrzeugrades 1 eines Kraftfahrzeugs dargestellt. Das Fahrzeugrad 1 ist an einem Radträger 2 drehgelagert. Der Radträger 2 ist über Querlenker 3 am Fahrzeugaufbau 4 angelenkt. Zusätzlich wirkt ein Schräglenker 5 auf den Radträger 2, der über eine Koppelstange 6 und über eine Schwenkachse D drehgelenkig mit dem Fahrzeugaufbau 4 verbunden ist.

In Figur 2 ist die Anlenkstelle zwischen der Koppelstange 6 und dem Fahrzeugaufbau 4 dargestellt. Die Koppelstange 6 ist im Bereich eines Befestigungsauges 7 mit einem elektrischen Dämpfer 8 in hier nicht näher dargestellter Weise gekoppelt. Der elektrische Dämpfer 8 liegt in einer Halterung 9 ein, die hier mit unterbrochenen Linien beispielhaft angedeutet ist. Die Koppelstange 6 ist um die Schwenkachse D entsprechend dem Doppelpfeil B durch am Radträger zwei (Fig. 1) auftretende Schwingungen auslenkbar. Die auftretenden Schwingungen werden über den Schräglenker 5 von Figur 1, der an der Bohrung 10 mit der Koppelstange 6 gekoppelt ist, auf die Koppelstange 6 übertragen. Der als Generator arbeitende elektrische Rotationsdämpfer 8 bewirkt eine Dämpfung dieser Schwingungen.

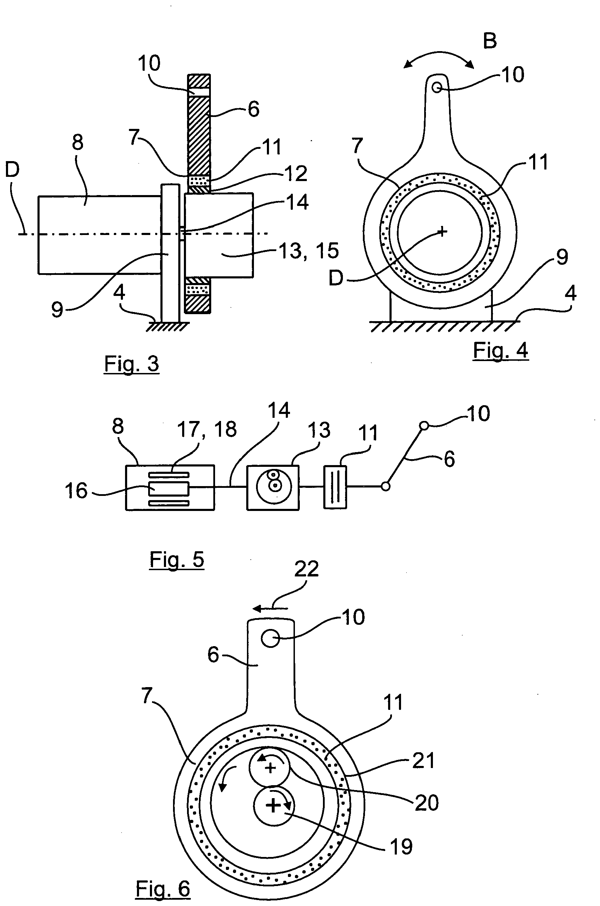

Figur 3 zeigt nun die Seitenansicht einer Dämpfungseinrichtung mit einem Rotationsdämpfer 8, der über ein Getriebe 13 und eine Rutschkupplung 11 mit der Koppelstange 6 zusammenwirkt. Die Koppelstange 6 ist zusammen mit der einliegenden Rutschkupplung 11 im Schnitt dargestellt. Die Rutschkupplung 11 umgreift einen Lagerring 12, der mit dem Gehäuse 15 des Getriebes 13 drehfest verbunden ist. Andererseits liegt die Rutschkupplung 11 in einem Befestigungsauge 7 der Koppelstange 6 ein.

Der Rotationsdämpfer 8 liegt drehfest in der Halterung 9 ein, während das Getriebe 13 über das Gehäuse 15 um die Schwenkachse D schwenkbar ist. Eine Auslenkung der Koppelstange 6 und eine damit verbundene Schwenkbewegung des Getriebes 13 um die Schwenkachse D versetzt die zum Rotationsdämpfer 8 führende Getriebewelle 14 in Rotation. Diese Rotation wird im Rotationsdämpfer 8 in an sich bekannter Weise gedämpft.

Die stirnseitige Ansicht von Figur 4 zeigt den axialsymmetrischen Aufbau des Getriebes 13 und der Rutschkupplung 11, die gemeinsam in dem Befestigungsauge 7 der Koppelstange 6 einliegen. An der Koppelstange 6 auftretende Auslenkbewegungen, entsprechend dem Doppelpfeil B, werden direkt auf das Getriebe 13 übertragen, solange ein vorgegebenes Grenzdrehmoment nicht überschritten wird. Da die Auslenkbewegungen um die Schwenkachse D vom Rotationsdämpfer 8 gedämpft werden, tritt an der Rutschkupplung 11 ein Drehmoment auf. Übersteigt dieses Drehmoment einen vorgegebenen Wert, rutscht die Koppelstange 6 an der Rutschkupplung 11 durch, das heißt es tritt eine Relativbewegung zwischen der Koppelstange 6 und dem Getriebe 13 auf. Dadurch verschiebt sich die Ruheposition der Koppelstange 6 in Bezug auf das Getriebe 13.

In Figur 5 zeigen Funktionsblöcke die unterschiedlichen Elemente der Dämpfungseinrichtung. Die Koppelstange 6 ist über die Rutschkupplung 11 mit dem Getriebe 13 gekoppelt, welches hier als Planetengetriebe angedeutet ist. Die Ausgangsstufe des Getriebes 13 treibt über die Getriebewelle 14 den Rotor 16 eines elektrischen Rotationsdämpfers 8 an, dessen Stator 17 Induktionswicklungen 18 besitzt. Eine Schwenkbewegung an der Koppelstange 6 wird bis zu einem Grenzdrehmoment direkt auf das Getriebe 13 übertragen, wodurch der Rotor 16 in Rotation versetzt wird. Die Rotation des Rotors 16 erzeugt durch Induktion eine der Rotation entgegenwirkende Kraft.

Figur 6 zeigt die erste Getriebestufe des Getriebes 13, welches hier als Planetengetriebe ausgebildet ist. Das koaxial zu dem hier nicht ersichtlichen Rotationsdämpfer 8 angeordnete Sonnenrad 19 ist über ein Planetenrad 20 mit einem innenverzahnten Hohlrad 21 gekoppelt. Die verwendeten und miteinander in Eingriff stehenden Zahnräder 19 bis 21 sind hier vereinfacht dargestellt.

Erfolgt eine Auslenkung der Koppelstange 6 entsprechend der Pfeilrichtung 22, so führt dies zu Drehbewegungen an den Zahnrädern 19 bis 21 entsprechend den dort angegebenen Pfeilrichtungen. Dabei wird über das Sonnenrad 19 und das Planetenrad 20 eine der Auslenkbewegung der Koppelstange 6 entgegenwirkende Dämpfungskraft auf das Hohlrad 21 übertragen. Diese Dämpfungskraft ist umso größer, je größer die Dämpfungswirkung im Rotationsdämpfer 8 ist. Bei schnellen bzw. stoßartigen Auslenkbewegungen der Koppelstange 6 kann die vom Rotationsdämpfer 8 erzeugte Dämpfung so stark sein, dass das an der Rutschkupplung 11 auftretende Drehmoment einen Drehmomentgrenzwert übersteigt und die Koppelstange 6 durchrutscht und eine Relativbewegung in Bezug auf das Hohlrad 21 durchführt. Die Rutschkupplung 11 bewirkt in diesem Fall das Durchrutschen der Koppelstange 6 im Bezug auf das Hohlrad 21. Dadurch ändert sich die Relativposition zwischen der Koppelstange 6 und dem Hohlrad 21, so dass andere Zahnkranzbereiche der Zahnräder 19 bis 21 miteinander in Eingriff stehen. Über einen längeren Zeitraum führt dies bei einer Vielzahl von Überschreitungen des Grenzdrehmoments dazu, dass eine gleichmäßige Benutzung und Beanspruchung sämtlicher Zahnkranzbereiche der Zahnräder 19 bis 21 erfolgt.

## Patentansprüche

1. Dämpfungseinrichtung mit einem Rotationsdämpfer (8) für ein Fahrzeug zum Dämpfen einer an einem Eingangselement (6), insbesondere einer Koppelstange, auftretenden Schwenkbewegung, wobei das Eingangselement (6) über ein Getriebe (13) einen Rotor (16) des Rotationsdämpfers (8) beim Verschwenken antreibt, wobei der Rotationsdämpfer (8) ein elektrischer Rotationsdämpfer (8) ist, der als Generator arbeitet, **dadurch gekennzeichnet, dass** das Eingangselement (6) über eine Rutschkupplung (11) mit dem Getriebe (13) gekoppelt ist, dass an der Rutschkupplung (11) auftretende Drehmomente, die über einem vorgegebenen Grenzdrehmoment liegen, zu einer Relativbewegung zwischen dem Eingangselement (6) und dem Getriebe (13) führen, und dass das Eingangselement (6) ein Befestigungsauge (7) aufweist, womit das Eingangselement (6) an der Rutschkupplung (11) angreift.

2. Dämpfungseinrichtung nach Anspruch 1, **dadurch gekennzeichnet, dass** das Grenzdrehmoment einstellbar ist.

3. Dämpfungseinrichtung nach einem der vorhergehenden Ansprüche, **dadurch gekennzeichnet, dass** die Rutschkupplung (11) zwischen dem Eingangselement (6) und der ersten Stufe eines mehrstufigen Getriebes (13) angeordnet ist.

4. Dämpfungseinrichtung nach einem der vorhergehenden Ansprüche, **dadurch gekennzeichnet, dass** die Rutschkupplung (11) zwischen einem als Hohlrad (21) ausgebildeten Zahnrad eines Planetengetriebes und dem Eingangselement (6) angeordnet ist.

5. Dämpfungseinrichtung nach einem der Ansprüche 1 bis 3, **dadurch gekennzeichnet, dass** die Rutschkupplung (11) zwischen dem Gehäuse (15) des Getriebes (13) und dem Eingangselement (6) angeordnet ist.

## Claims

1. Damping device having a rotary damper (8) for a vehicle for damping a pivoting movement occurring at an input element (6), in particular a coupling rod, wherein the input element (6) when pivoting drives via a transmission (13) a rotor (16) of the rotary damper (8), wherein the rotary damper (8) is an electrical rotary damper (8) which works as a generator, **characterised in that** the input element (6) is coupled via a friction clutch (11) with the transmission (13), that torques occurring at the friction clutch (11) which lie above a predetermined threshold torque lead to a relative movement between the input element (6) and the transmission (13), and that the input element (6) has a fixing eyelet (7), wherein the input element (6) engages at the friction clutch (11).

2. Damping device according to claim 1, **characterised in that** the threshold torque is adjustable.

3. Damping device according to any of the preceding claims, **characterised in that** the friction clutch (11) is disposed between the input element (6) and the first stage of a multistage transmission (13).

4. Damping device according to any of the preceding claims, **characterised in that** the friction clutch (11) is disposed between a gear wheel, formed as annular gear (21), of a planetary transmission and the input element (6).

5. Damping device according to any of claims 1 to 3, **characterised in that** the friction clutch (11) is disposed between the housing (15) of the transmission (13) and the input element (6).

## Revendications

1. Dispositif d'amortissement avec un amortisseur de rotation (8) pour un véhicule servant à amortir un mouvement de pivotement apparaissant au niveau d'un élément d'entrée (6), en particulier d'une biellette de renvoi, dans lequel l'élément d'entrée (6) entraîne, par l'intermédiaire d'une transmission (13), un rotor (16) de l'amortisseur de rotation (8) lors du pivotement, dans lequel l'amortisseur de rotation (8) est un amortisseur de rotation électrique (8), qui fonctionne en tant que générateur, **caractérisé en ce que** l'élément d'entrée (6) est couplé à la transmission (13) par l'intermédiaire d'un embrayage à friction (11), que des couples de rotation apparaissant au niveau de l'embrayage à friction (11), qui sont supérieurs à un couple de rotation limite prédéfini, conduisent à un déplacement relatif entre l'élément d'entrée (6) et la transmission (13), et que l'élément d'entrée (6) présente un oeillet de fixation (7), avec lequel l'élément d'entrée (6) vient en prise au niveau de l'embrayage à friction (11).

2. Dispositif d'amortissement selon la revendication 1, **caractérisé en ce que** le couple de rotation limite peut être réglé.

3. Dispositif d'amortissement selon l'une quelconque des revendications précédentes, **caractérisé en ce que** l'embrayage à friction (11) est disposé entre l'élément d'entrée (6) et le premier étage d'une transmission (13) à plusieurs étages.

4. Dispositif d'amortissement selon l'une quelconque des revendications précédentes, **caractérisé en ce que** l'embrayage à friction (11) est disposé entre une roue dentée, réalisée sous la forme d'une couronne (21), d'un engrenage planétaire et l'élément d'entrée (6).

5. Dispositif d'amortissement selon l'une quelconque des revendications 1 à 3, **caractérisé en ce que** l'embrayage à friction (11) est disposé entre le boîtier (15) de la transmission (13) et l'élément d'entrée (6).
